# EUROPEAN PATENT SPECIFICATION

(11) **EP 2 640 035 B1**
(45) Date of publication and mention of the grant of the patent: **08.04.2015**
(21) Application number: 11846404.9
(22) Date of filing: 08.11.2011
(51) Int. Cl.: H04L 29/08

(54) **HYPERTEXT TRANSFER PROTOCOL (HTTP) STREAM ASSOCIATION METHOD AND DEVICE**
HTTP-STREAM-ZUORDNUNGSVERFAHREN UND -VORRICHTUNG
DISPOSITIF ET PROCÉDÉ D'ASSOCIATION DE FLUX DE PROTOCOLE DE TRANSFERT HYPERTEXTE (HTTP)

(30) Priority: 10.12.2010 CN 201010601431
(43) Date of publication of application: 18.09.2013
(73) Proprietor: Huawei Technologies Co., Ltd., Longgang District Shenzhen, Guangdong 518129 (CN)
(72) Inventor: GUO, Jianhua, Shenzhen Guangdong 518129 (CN)
(74) Representative: Körber, Martin Hans
(86) International application number: PCT/CN2011/081934
(87) International publication number: WO 2012/075870

(56) References cited:
- WO-A2-01/89170
- CN-A- 101 163 156
- CN-A- 101 287 013
- CN-A- 102 098 328
- GB-A- 2 425 194
- US-A1- 2003 061 360

## Description

### TECHNICAL FIELD

The present invention relates to the field of information technologies, and in particular, to a hypertext transfer protocol HTTP stream association method and device.

### BACKGROUND

With the development of Internet technologies and the mobile Internet, a hypertext transfer protocol (HyperText Transfer Protocol; HTTP) is applied widely.

The content borne in HTTP is usually in a hypertext markup language (HTML Hypertext Markup Language; HTML) format, and the HTML includes a hyperlink function, so that multiple mutually associated streams are generated in an HTTP event.

In the prior art, the control and processing on the HTTP event are performed based on a single stream, but multiple mutually associated streams may be generated in one HTTP event. Therefore, accurate control and processing on the HTTP event can hardly be performed in the prior art. For example, HTTP event charging and uniform resource locator (Uniform Resource Locators; URL) statistics are not accurate, and URL filtering is not performed thoroughly.

US 2003/0061360 A1 discloses an arrangement that is provided for identifying web site visitors. When a client behind a proxy server sends a browsing request for a web page at a web site hosted by a web server, the web server identifies a browsing session according to a session tag associated with the browsing session and uniquely identifies the client. A hit at the web page is recorded according to the session tag.

### SUMMARY

Embodiments of the present invention provide a hypertext transfer protocol HTTP stream association method according to claim 1 and device according to claim 5, so as to solve the problem that accurate control and processing on an HTTP event can hardly be performed in the prior art.

An embodiment of the present invention provides a hypertext transfer protocol HTTP stream association method, including:
receiving a hypertext transfer protocol request HTTP Get;
if the HTTP Get does not include a referer Referer field, storing a request uniform resource locator URL in the HTTP Get to an association record table; and
if the HTTP Get includes a Referer field, storing a URL included in the Referer field to the association record table, and searching for a same URL in the association record table and performing association matching of a primary stream and a secondary stream, receiving a HTTP response corresponding to the HTTP Get if the HTTP Get comprises the Referer field, and if the HTTP response comprises a hyperlink, marking a stream corresponding to the request URL in the HTTP Get stored in the association record table as the secondary stream and marking a stream corresponding to the URL comprised in the Referer field as the primary stream.

An embodiment of the present invention further provides a hypertext transfer protocol HTTP stream association device, including:
a receiving module, configured to receive a hypertext transfer protocol request HTTP Get; and
a processing module, configured to: if the HTTP Get received by the receiving module does not include a Referer field, store a request uniform resource locator URL in the HTTP Get and a URL comprised in the Referer field to an association record table; and if the HTTP Get received by the receiving module includes a Referer field, store a URL included in the Referer field to the association record table, search for a same URL in the association record table and perform association matching of a primary stream and a secondary stream;
the processing module is further configured to, if the HTTP response received by the receiving module comprises a hyperlink, mark a stream corresponding to the request URL in the HTTP Get stored in the association record table as the secondary stream, and mark a stream corresponding to the URL in the Referer field as the primary stream.

By using the hypertext transfer protocol HTTP stream association method and device provided in the embodiments of the present invention, association matching is performed through a URL on multiple mutually associated streams generated in an HTTP event, thereby implementing accurate control and processing on the HTTP event.

### BRIEF DESCRIPTION OF DRAWINGS

To describe the technical solutions in the embodiments of the present invention or in the prior art more clearly, the following briefly introduces the accompanying drawings required for describing the embodiments or the prior art. Apparently, the accompanying drawings in the following description show merely some embodiments of the present invention, and persons of ordinary skill in the art may still derive other drawings from these accompanying drawings without creative efforts.
FIG. 1 is a flowchart of a first embodiment of a hypertext transfer protocol HTTP stream association method according to the present invention;
FIG. 2 is a signaling diagram of a second embodiment of a hypertext transfer protocol HTTP stream association method according to the present invention;
FIG. 3 is a schematic structural diagram of an association record table according to an embodiment of the present invention; and
FIG. 4 is a schematic structural diagram of a first embodiment of a hypertext transfer protocol HTTP stream association device according to the present invention.

### DESCRIPTION OF EMBODIMENTS

To make the objectives, technical solutions, and advantages of the embodiments of the present invention more comprehensible, the following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by persons of ordinary skill in the art based on the embodiments of the present invention without creative efforts shall fall within the protection scope of the present invention.

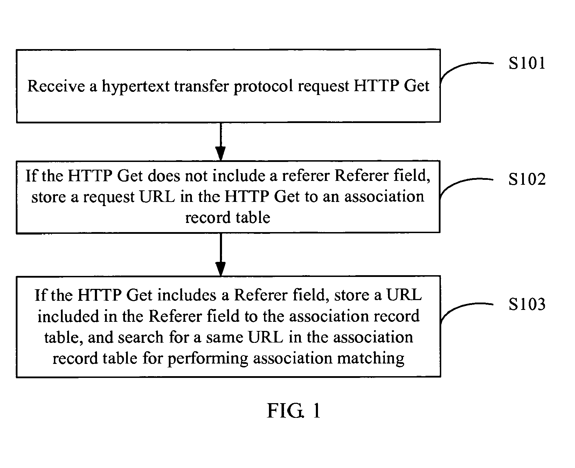

FIG. 1 is a flowchart of a first embodiment of a hypertext transfer protocol HTTP stream association method according to the present invention, and as shown in FIG. 1, the method includes:
S101. receiving a hypertext transfer protocol request HTTP Get;
S102. if the HTTP Get does not include a referer Referer field, storing a request uniform resource locator URL in the HTTP Get to an association record table; and S103. if the HTTP Get includes a Referer field, storing a URL included in the Referer field to the association record table, and searching for a same URL in the association record table and performing association matching.

In the embodiment of the present invention, a device executing the HTTP stream association method may be a gateway device (Gateway). For example, in various radio 3G networks, the device may be a gateway general packet radio service (General Packet Radio Service; GPRS) support node (Gateway GPRS Support Node; GGSN), a packet data serving node (Packet Data Serving Node; PDSN), or a packet switch gateway (Packet Switch Gateway; PS GW), and the like. The device may also be a relevant gateway device in a fixed network, for example, a broadband access server (Broadband Remote Access Server; BRAS) and the like.

Multiple mutually associated streams may be generated in an HTTP event. For example, when a user accesses a page through a Web client or a browser, because the page may include a hyperlink, the user may establish a connection with multiple servers through the Web client or the browser, where a connection established with each server is referred to as a stream, and multiple streams may be generated when the user accesses a page through the Web client or the browser. In addition, if the page accessed by the user does not include a hyperlink, the user establishes a connection with only one server, and only one single stream is generated.

For ease of description, in the embodiment of the present invention, the stream generated first is referred to as a primary stream, and other stream induced by the primary stream is referred to as a secondary stream.

HTTP Get packets corresponding to the primary stream, the single stream, and the secondary stream each carry a request URL, that is, a URL carried by a request line and a host Host line of the packet. However, the HTTP Get packets corresponding to the primary stream and the single stream do not include the Referer field, where the Referer field is null, and an HTTP Get packet corresponding to the secondary stream includes the Referer field. Because the secondary stream is induced by the primary stream, the Referer field in the packet corresponding to the secondary stream carries the request URL in the primary stream.

In the process in which the user initiates the HTTP Get to a server through the Web client or the browser, the HTTP Get is forwarded by the gateway device. After receiving the HTTP Get, the gateway device determines whether a corresponding stream is the secondary stream by checking whether the Referer field in the HTTP Get is null. If the HTTP Get includes the Referer field, the corresponding stream is the secondary stream; but if HTTP Get does not include the Referer field, the corresponding stream may be the primary stream, and may also be the single stream.

When receiving the HTTP Get packet, the gateway device may store the URL carried in the packet to the association record table, and perform association matching of the primary stream and the secondary stream through URLs of the streams.

Specifically, if the HTTP Get received by the gateway device does not include the Referer field, the corresponding stream may be the primary stream, and may also be the single stream, and the gateway device stores the URL carried in the request line and the Host line to the association record table. If the HTTP Get received by the gateway device includes the Referer field, the corresponding stream is the secondary stream, and the gateway device stores the URL carried in the Referer field to the association record table. The primary stream is the stream generated first, and therefore, when the gateway device stores the URL of the Referer field in the packet corresponding to the secondary stream, a request URL in the packet corresponding to the primary stream inducing the secondary stream is already stored in the association record table. The URL of the Referer field in the packet corresponding to the secondary stream is the same as the request URL in the packet corresponding to the primary stream inducing the secondary stream, and therefore, the gateway device may perform association matching, that is, when storing the URL of the Referer field in the packet corresponding to the secondary stream, the gateway device may search for the same URL in the association record table and perform association matching for the two.

It should be noted that, in many scenarios, and in one HTTP event, one primary stream may induce multiple secondary streams. Therefore, when the gateway device stores the URL of the Referer field in the packet corresponding to the secondary stream, the URL of the Referer field in the packet corresponding to another secondary stream induced by the primary stream may be already stored in the association record table. Therefore, when searching the association record table for association matching, the gateway device may find multiple same URLs. In this case, the gateway device may perform association matching on the URLs together, so as to display all the associated streams generated in one HTTP event in the association record table.

The gateway device may perform association matching in multiple manners, for example, through index table establishment or record identification or in other manners.

The hypertext transfer protocol HTTP stream association method provided in the embodiment of the present invention may be applied to multiple scenarios. For example, when charging is performed for the HTTP event, with the hypertext transfer protocol HTTP stream association method provided in the embodiment of the present invention, the primary stream and a relevant secondary stream can be recognized from the event, thereby improving charging accuracy. During the process of making URL statistics, each associated association information may be included in HTTP statistic information, so that statistic information carrying access hierarchy can be provided; and when URL filtering needs to performed on HTTP access, accurate filtering may be performed on a specific URL through the association between multiple streams, so as to filter out the secondary stream when the primary stream is filtered out.

By using the hypertext transfer protocol HTTP stream association method provided in the embodiment of the present invention, association matching is performed through a URL on multiple mutually associated streams generated in an HTTP event, thereby implementing accurate control and processing on the HTTP event.

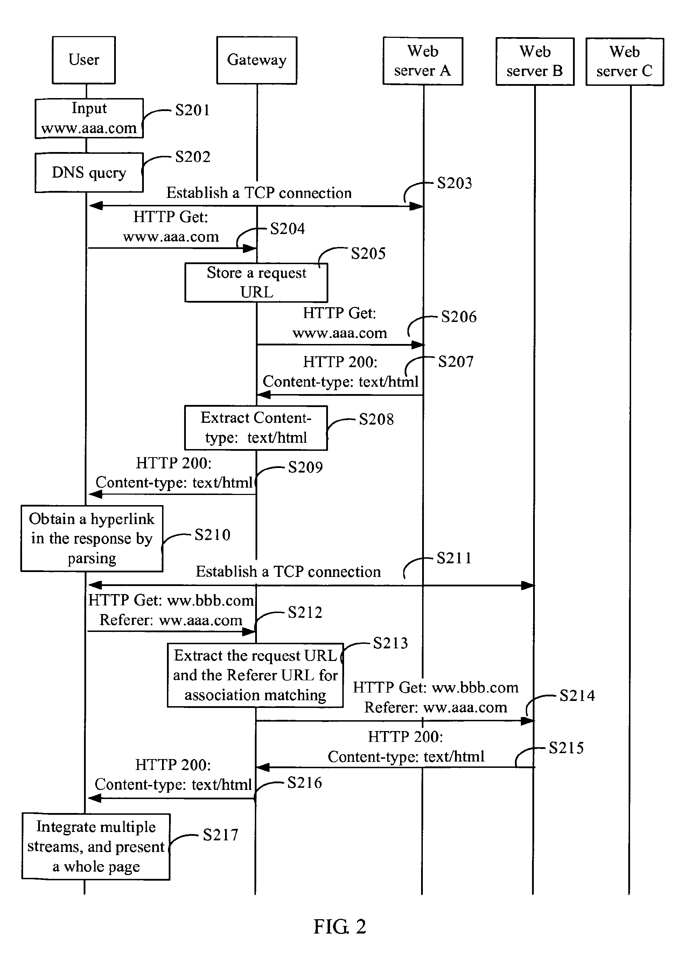

FIG. 2 is a signaling diagram of a second embodiment of a hypertext transfer protocol HTTP stream association method according to the present invention. As shown in FIG. 2, in this embodiment, an HTTP event that the user browses a Web page is taken as an example to describe in detail the HTTP stream association method provided in the present invention, but is not regarded as a limitation on the present invention. The HTTP stream association method provided in the present invention is also applied to multiple application scenarios.

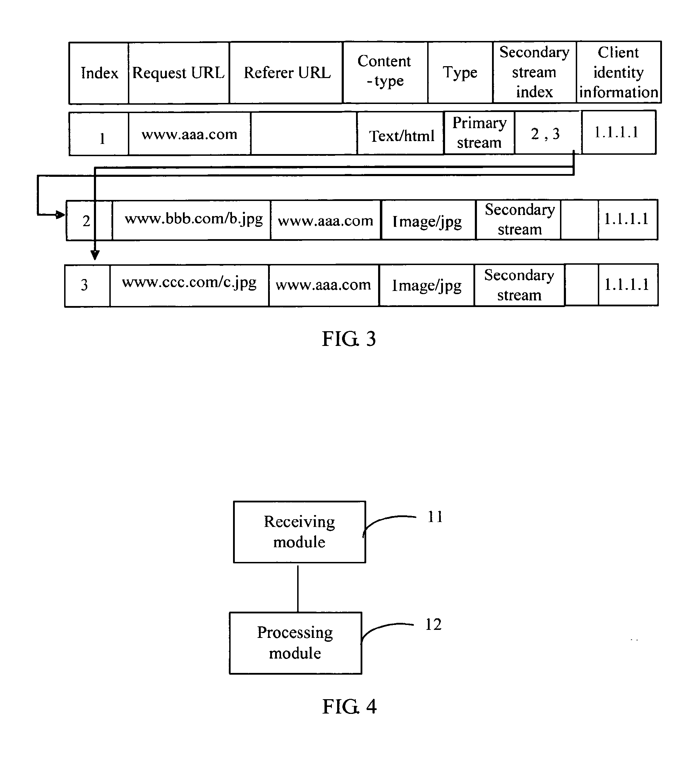

The method includes the following:
S201. A user inputs www.aaa.com at a Web client or a browser.
S202. The browser of the user first obtains an Internet protocol (Internet Protocol; IP) address corresponding to www.aaa.com through a domain name system (Domain Name System; DNS) or a local DNS cache.
S203. The browser and a Web server (Server) A corresponding to the IP address establish a transmission control protocol (Transmission Control Protocol; TCP) connection, that is, generate a stream.
   The stream generated in S203 is the stream first generated in the HTTP event, that is, a primary stream.
S204. The browser of the user sends an HTTP Get to the Web server A over the primary stream. The HTTP Get is sent over the primary stream, and therefore, according to an HTTP protocol, the request does not include a Referer field, and a request URL of a packet, that is a URL of a request line and a Host field of the packet is www.aaa.com.
S205. A gateway receives the HTTP Get, and recognizes that the request does not include the Referer field, and then the gateway extracts the request URL www.aaa.com from the request line and the Host field of the HTTP Get packet and stores it in an association record table.
   Because the request does not include the Referer field, the gateway may preliminarily determine that the stream corresponding to the request is not a secondary stream, but may be the primary stream or a single stream.
   Further, if the stream corresponding to the HTTP Get is the primary stream, a suffix of a file name of the request is html, php, asp, aspx, shtml or shtm, and the HTTP response corresponding to the request may include a hyperlink. If the stream corresponding to the HTTP Get is the single stream, the suffix of the file name of the request is not the suffix listed in the foregoing, and the HTTP response corresponding to the request does not include a hyperlink. Therefore, the gateway may determine the condition of the single stream accordingly, and delete the request URL in the HTTP Get from the association record table.
   Alternatively, if the stream corresponding to the HTTP Get is the single stream, there is no other stream in association matching with the single stream, and according to this, if association matching is not performed within a set time on the URL stored in the association record table, the gateway may delete the URL on which the association matching is not performed.
   The gateway may delete the URL record corresponding to the single stream stored in the association record table in the foregoing manners, thereby saving the storage space of the gateway.
S206. The gateway forwards the HTTP Get to the Web server A.
S207. The Web server A returns a response HTTP 200 over the primary stream.
   The HTTP 200 is the HTTP response corresponding to the HTTP Get, and a Content-type field of the response packet is: text/html, that is, context borne in the HTTP 200 packet may include a hyperlink, for example, links to resources of multiple sites such as www.bbb.com
S208. The gateway knows that a content-type in the HTTP response is text/html by parsing.
S209. The gateway forwards the HTTP 200 response to the browser of the user.
S210. The browser of the user obtains a hyperlink in the HTTP 200 by parsing.
S211. The browser of the user obtains a hyperlink www.bbb.com/b.jpg by parsing, and establishes a TCP connection automatically with a Web server B corresponding to www.bbb.com according to the HTML protocol, that is, generates a secondary stream.
S212. The browser of the user sends an HTTP Get over the secondary stream, where a URL of the request line and the Host field in the request packet is www.bbb.com/b.jpg, and the URL in the Referer field is www.aaa.com, that is, the same as the request URL of the HTTP Get sent over the primary stream.
S213. The gateway receives the HTTP Get over the secondary stream, and recognizes that the request includes the Referer field.
   Because the request includes the Referer field, the gateway recognizes that the stream is the secondary stream, and the gateway stores the request URL www.bbb.com/b.jpg of the request and www.aaa.com stored in the Referer field to the association record table, and identifies the stream corresponding thereto as the secondary stream. The gateway may search for a same URL in the association record table and perform association matching. Because the request URL www.aaa.com corresponding to the primary stream is already stored in the association record table, the gateway can find the request URL corresponding to the primary stream, and mark the stream corresponding thereto as the primary stream.
   It should be noted that, if the gateway recognizes that the HTTP Get includes the Referer field, the gateway may recognize that the stream corresponding to the request is the secondary stream. If the HTTP response corresponding to the HTTP Get includes the hyperlink, the gateway may further determine that the corresponding stream is the secondary stream. The feature that the HTTP response corresponding to the HTTP Get includes a hyperlink may assist the gateway to determine that the corresponding stream is the secondary stream.
   In S213, the gateway completes association matching between the secondary stream and the primary stream.
S214. The gateway forwards the HTTP Get to the Web server B.
S215. The Web server B responds with a response of HTTP 200.
S216. The gateway forwards the HTTP 200 response of the Web server B to the browser of the user.
   The browser detects whether there is other hyperlink requiring a secondary stream to be established. If the response also includes other hyperlink, a TCP connection is established between the browser and a server corresponding to another hyperlink, and another secondary stream is generated, that is, steps S211 to S216 are performed.
   Finally, a mutual association between multiple streams can be identified in the association record table, and the matching association may be established through an index, referring to FIG. 3. Certainly the matching association between the multiple streams may also be established in other feasible manners.
S217. After integrating content obtained from multiple associated streams, the browser presents a complete Web page to the user.

The user browsing event is completed.

In addition, it should be noted that, different users may browse a same Web page through the browser at the same time. In this case, in order to accurately associate the multiple streams generated by the user, the client identity information may be marked on each URL recorded in the association record table, where the client identity information is used to uniquely identify a client sending the HTTP Get, and may be identification information such as an IP address, a port number, or a media access control (Media Access Control; MAC) address.

In this embodiment, only a scenario where the user browses a Web page is taken as an example to describe the HTTP stream association method provided in the present invention, and the HTTP stream association method provided in the embodiment of the present invention may also be applied to scenarios such as the HTTP event charging, URL statistics, or URL filtering, which is not enumerated herein.

Persons of ordinary skill in the art may understand that all or a part of the processes of the methods in the embodiments may be implemented by a computer program instructing relevant hardware. The program may be stored in a computer readable storage medium. When the program is run, the processes of the methods in the embodiments are performed. The storage medium may be a magnetic disk, an optical disk, a Read-Only Memory (Read-Only Memory, ROM), or a Random Access Memory (Random Access Memory, RAM).

FIG. 4 is a schematic structural diagram of a first embodiment of a hypertext transfer protocol HTTP stream association device according to the present invention. As shown in FIG. 4, the device includes a receiving module 11 and a processing module 12, where:
the receiving module 11 is configured to receive an HTTP Get; and
the processing module 12 is configured to: if the HTTP Get received by the receiving module 11 does not include a Referer field, store a request uniform resource locator URL in the HTTP Get to an association record table; and if the HTTP Get received by the receiving module 11 includes a Referer field, store a URL included in the Referer field to the association record table, search for a same URL in the association record table and perform association matching. On the basis of the foregoing embodiment,
the receiving module 11 may further be configured to receive an HTTP response corresponding to the HTTP Get; and
the processing module 12 may further be configured to: if the HTTP response received by the receiving module 11 includes a hyperlink, mark a stream corresponding to the URL in the Referer field in the HTTP Get stored in the association record table as a secondary stream, and mark a stream corresponding to the URL in association matching with the URL in the Referer field as a primary stream.

Further, the processing module 12 is further configured to mark client identity information on the URL or URLs stored in the association record table, where the client identity information is used to uniquely identify a client sending the HTTP Get.

Further, the processing module 12 is further configured to: if the HTTP response corresponding to the HTTP Get and received by the receiving module 11 does not include a hyperlink, delete the request URL in the HTTP Get from the association record table.

Further, the processing module 12 is further configured to: if association matching is not performed within a set time on the URL stored in the association record table, delete the URL on which the association matching is not performed.

The hypertext transfer protocol HTTP stream association device provided in this embodiment performs association matching through a URL on multiple mutually associated streams generated in an HTTP event, thereby implementing accurate control and processing on the HTTP event.

The hypertext transfer protocol HTTP stream association device provided in this embodiment is a functional device implementing the HTTP stream association method provided in the embodiment of the present invention, and the device may be a gateway device (Gateway), for example, a GGSN, PDSN, or PS GW, and may also be a relevant gateway device in the fixed network, for example, a BRAS. The specific process in which the HTTP stream association device provided in this embodiment executes the HTTP stream association method corresponds to the foregoing method embodiment. For details, reference may be made to the foregoing method embodiment, which is not described again herein.

Finally, it should be noted that the foregoing embodiments are merely provided for describing the technical solutions of the present invention, but not intended to limit the present invention. It should be understood by persons of ordinary skill in the art that although the present invention has been described in detail with reference to the foregoing embodiments, modifications can be made to the technical solutions described in the foregoing embodiments, or equivalent replacements can be made to some technical features in the technical solutions, as long as such modifications or replacements do not cause the essence of corresponding technical solutions to depart from the scope of the present invention.

## Claims

1. A hypertext transfer protocol, HTTP, stream association method, comprising:
Receiving (S101, S204) a HTTP Get;
if the HTTP Get does not comprise a Referer field, storing (S102, S205) a request uniform resource locator URL, in the HTTP Get to an association record table; and
if the HTTP Get comprises a Referer field, storing (S103, S213) a request uniform resource locator, URL, in the HTTP Get and a URL comprised in the Referer field to the association record table, searching for a same URL as the URL comprised in the Referer field in the association record table and performing association matching and, according to the association matching, marking a stream corresponding to the URL comprised in the Referer field as a primary stream, receiving an HTTP response corresponding to the HTTP Get, if the HTTP Get comprises the Referer field, and if the HTTP response comprises a hyperlink, marking a stream corresponding to the request URL in the HTTP Get stored in the association record table as a secondary stream.

2. The method according to claim 1, further comprising:
marking client identity information on the request URL in the HTTP Get and the URL comprised in the Referer field stored in the association record table, wherein the client identity information is used to uniquely identify a client sending the HTTP Get.

3. The method according to claim 1, wherein if the HTTP Get does not comprise the Referer field, the method further comprises:
if a HTTP response corresponding to the HTTP Get does not comprise a hyperlink, deleting the request URL in the HTTP Get from the association record table.

4. The method according to claim 1, wherein if the HTTP Get does not comprise the Referer field, the method further comprises:
if association matching is not performed within a set time on the request URL stored in the association record table, deleting the request URL on which the association matching is not performed.

5. A hypertext transfer protocol, HTTP, stream association device, comprising:
a receiving module (11), configured to receive a HTTP Get; and
a processing module (12), configured to: if the HTTP Get received by the receiving module does not comprise a Referer field, store a request uniform resource locator URL, in the HTTP Get to an association record table; and if the HTTP Get received by the receiving module comprises a Referer field, store a request uniform resource locator, URL, in the HTTP Get and a URL comprised in the Referer field to the association record table, search for a same URL as the URL comprised in the Referer field in the association record table and perform association matching and, according to the association matching, mark a stream corresponding to the URL in the Referer field as a primary stream;
wherein the receiving module is further configured to receive a HTTP response corresponding to the HTTP Get if the HTTP Get comprises the Referer field; and
the processing module (12) is further configured to, if the HTTP response received by the receiving module comprises a hyperlink, mark a stream corresponding to the request URL in the HTTP Get stored in the association record table as a secondary stream.

6. The HTTP stream association device according to claim 5, wherein the processing module is further configured to mark client identity information on the request URL in the HTTP Get and the URL comprised in the Referer field stored in the association record table, wherein the client identity information is used to uniquely identify a client sending the HTTP Get.

7. The HTTP stream association device according to claim 5, wherein the processing module is further configured to: if the HTTP Get does not comprise the Referer field, if a HTTP response corresponding to the HTTP Get and received by the receiving module does not comprise a hyperlink, delete the request URL in the HTTP Get from the association record table.

8. The HTTP stream association device according to claim 5, wherein the processing module is further configured to: if the HTTP Get does not comprise the Referer field, if association matching is not performed within a set time on the request URL stored in the association record table, delete the request URL on which the association matching is not performed.

9. The HTTP stream association device according to any on claim of 5-8 , wherein the HTTP stream association device is a gateway general packet radio service, GPRS, support node, GGSN, a packet data serving node, PDSN, a packet switch gateway, PS GW, or a broadband access server, BRAS.

## Patentansprüche

1. "Hypertext Transfer Protocol"-Stream-Zuordnungsverfahren, HTTP-Stream-Zuordnungsverfahren, umfassend:
Empfangen (S101, S204) eines HTTP-GET;
wenn der HTTP-GET kein "Referer"-Feld umfasst, Speichern (S102, S205) einer Anfrage-Internetadresse (Uniform Resource Locator, URL) im HTTP-GET in einer Zuordnungsregistrierungstabelle; und
wenn der HTTP-GET ein "Referer"-Feld umfasst, Speichern (S103, S213) einer Anfrage-Internetadresse (URL) im HTTP-GET und einer URL, die im "Referer"-Feld enthalten ist, in der Zuordnungsregistrierungstabelle, Suchen nach einer gleichen URL wie die URL, die im "Referer"-Feld enthalten ist, in der Zuordnungsregistrierungstabelle und Durchführen von Zuordnungsanpassung und gemäß der Zuordnungsanpassung Markieren eines Streams entsprechend der URL, die im "Referer"-Feld enthalten ist, als primären Stream, Empfangen einer HTTP-Antwort entsprechend dem HTTP-GET, wenn der HTTP-GET das "Referer"-Feld umfasst, und, wenn die HTTP-Antwort einen Hyperlink umfasst, Markieren eines Streams entsprechend der Anfrage-URL im HTTP-GET, der in der Zuordnungsregistrierungstabelle gespeichert ist, als sekundären Stream.

2. Verfahren nach Anspruch 1, ferner umfassend:
Markieren von Clientidentitätsinformation an der Anfrage-URL im HTTP-GET und der URL, die im "Referer"-Feld enthalten ist, die in der Zuordnungsregistrierungstabelle gespeichert sind, wobei die Clientidentitätsinformation verwendet wird, um einen Client, der den HTTP-GET sendet, eindeutig zu identifizieren.

3. Verfahren nach Anspruch 1, wobei, wenn der HTTP-GET das "Referer"-Feld nicht umfasst, das Verfahren ferner umfasst:
wenn eine HTTP-Antwort entsprechend dem HTTP-GET keinen Hyperlink umfasst, Löschen der Anfrage-URL im HTTP-GET aus der Zuordnungsregistrierungstabelle.

4. Verfahren nach Anspruch 1, wobei, wenn der HTTP-GET das "Referer"-Feld nicht umfasst, das Verfahren ferner umfasst:
wenn Zuordnungsanpassung nicht innerhalb einer angesetzten Zeit an der Anfrage-URL, die in der Zuordnungsregistrierungstabelle gespeichert ist, durchgeführt wird, Löschen der Anfrage-URL, an der die Zuordnungsanpassung nicht durchgeführt wird.

5. "Hypertext Transfer Protocol"-Stream-Zuordnungsvorrichtung, HTTP-Stream-Zuordnungsvorrichtung, umfassend:
ein Empfangsmodul (11), das dafür ausgelegt ist, einen HTTP-GET zu empfangen; und
ein Verarbeitungsmodul (12), das dafür ausgelegt ist: wenn der HTTP-GET, der durch das Empfangsmodul empfangen wurde, kein "Referer"-Feld umfasst, eine Anfrage-Internetadresse, URL, im HTTP-GET in eine Zuordnungsregistrierungstabelle zu speichern; und wenn der HTTP-GET, der durch das Empfangsmodul empfangen wurde, ein "Referer"-Feld umfasst, eine Anfrage-Internetadresse, URL, im HTTP-GET und eine URL, die im "Referer"-Feld enthalten ist, in die Zuordnungsregistrierungstabelle zu speichern, nach einer gleichen URL wie die URL, die im "Referer"-Feld enthalten ist, in der Zuordnungsregistrierungstabelle zu suchen und Zuordnungsanpassung durchzuführen und gemäß der Zuordnungsanpassung einen "Stream" entsprechend der URL im "Referer"-Feld als primären Stream zu markieren;
wobei das Empfangsmodul ferner dafür ausgelegt ist, eine HTTP-Antwort entsprechend dem HTTP-GET zu empfangen, wenn der HTTP-GET das "Referer"-Feld umfasst; und
das Verarbeitungsmodul (12) ferner dafür ausgelegt ist, wenn die HTTP-Antwort, die durch das Empfangsmodul empfangen wurde, einen Hyperlink umfasst, einen Stream entsprechend der Anfrage-URL im HTTP-GET, der in der Zuordnungsregistrierungstabelle gespeichert ist, als sekundären Stream zu markieren.

6. HTTP-Stream-Zuordnungsvorrichtung nach Anspruch 5, wobei das Verarbeitungsmodul ferner dafür ausgelegt ist, Clientidentitätsinformation an der Anfrage-URL im HTTP-GET und der URL, die im "Referer"-Feld enthalten ist, die in der Zuordnungsregistrierungstabelle gespeichert sind, zu markieren, wobei die Clientidentitätsinformation verwendet wird, um einen Client, der den HTTP-GET sendet, eindeutig zu identifizieren.

7. HTTP-Stream-Zuordnungsvorrichtung nach Anspruch 5, wobei das Verarbeitungsmodul ferner dafür ausgelegt ist: wenn der HTTP-GET das "Referer"-Feld nicht umfasst, wenn eine dem HTTP-GET entsprechende und durch das Empfangsmodul empfangene HTTP-Antwort keinen Hyperlink umfasst, die Anfrage-URL im HTTP-GET aus der Zuordnungsregistrierungstabelle zu löschen.

8. HTTP-Stream-Zuordnungsvorrichtung nach Anspruch 5, wobei das Verarbeitungsmodul ferner dafür ausgelegt ist: wenn der HTTP-GET das "Referer"-Feld nicht umfasst, wenn Zuordnungsanpassung nicht innerhalb einer angesetzten Zeit an der Anfrage-URL, die in der Zuordnungsregistrierungstabelle gespeichert ist, durchgeführt wird, die Anfrage-URL, an der die Zuordnungsanpassung nicht durchgeführt wird, zu löschen.

9. HTTP-Stream-Zuordnungsvorrichtung nach einem der Ansprüche 5-8, wobei die HTTP-Stream-Zuordnungsvorrichtung ein Netzübergang-GPRS-Unterstützungsknoten (General Packet Radio Service, GPRS, Support Node, GGSN), ein Paketdatenbedienungsknoten (Packet Data Serving Node, PDSN), ein Paketvermittlungs-Netzübergang (Packet Switch Gateway, PS GW) oder ein Breitbandzugangsserver (Broadband Access Server, BRAS ist.

## Revendications

1. Procédé d'association de flux de protocole de transfert hypertexte (HTTP), comprenant les étapes suivantes :
recevoir (S101, S204) une requête Get HTTP ;
si la requête Get HTTP ne comprend pas un champ Referer, stocker (S102, S205) un localisateur uniforme de ressources, URL, de requête dans la requête Get HTTP dans une table d'enregistrement d'association ; et
si la requête Get HTTP comprend un champ Referer, stocker (S 103, S213) un localisateur uniforme de ressources, URL, de requête dans la requête Get HTTP et un URL compris dans le champ Referer dans la table d'enregistrement d'association,
rechercher un URL identique à l'URL compris dans le champ Referer dans la table d'enregistrement d'association et exécuter une correspondance d'association et, conformément à la correspondance d'association, marquer un flux correspondant à l'URL compris dans le champ Referer comme flux primaire, recevoir une réponse HTTP correspondant à la requête Get http si la requête Get HTTP comprend le champ Referer, et si la réponse HTTP comprend un hyperlien, marquer un flux correspondant à l'URL requête dans la requête Get HTTP stockée dans la table d'enregistrement d'association comme flux secondaire.

2. Procédé selon la revendication 1, comprenant en outre l'étape suivante :
marquer des informations d'identité de client sur l'URL de requête dans la requête Get HTTP et l'URL compris dans le champ Referer stocké dans la table d'enregistrement d'association, les informations d'identité de client étant utilisées pour identifier uniquement un client envoyant la requête Get HTTP.

3. Procédé selon la revendication 1, dans lequel, si la requête Get HTTP ne comprend pas le champ Referer, le procédé comprend en outre l'étape suivante :
si une réponse HTTP correspondant à la requête Get HTTP ne comprend pas un hyperlien, supprimer l'URL de requête dans la requête Get HTTP de la table d'enregistrement d'association.

4. Procédé selon la revendication 1, dans lequel, si la requête Get HTTP ne comprend pas le champ Referer, le procédé comprend en outre l'étape suivante :
si une correspondance d'association n'est pas exécutée dans un temps défini sur l'URL de requéte stocké dans la table d'enregistrement d'association, supprimer l'URL de requéte sur lequel la correspondance d'association n'est pas exécutée.

5. Dispositif d'association de flux de protocole de transfert hypertexte, HTTP, comprenant :
un module de réception (11) configuré pour recevoir une requête Get HTTP ; et
un module de traitement (12), configuré pour : si la requête Get HTTP reçue par le module de réception ne comprend pas un champ Referer, stocker un localisateur uniforme de ressources, URL, de requête dans la requête Get HTTP dans une table d'enregistrement d'association ; et si la requête Get HTTP reçue par le module de réception comprend un champ Referer, stocker un localisateur uniforme de ressources, URL, de requête dans la requête Get HTTP et un URL compris dans le champ Referer, dans la table d'enregistrement d'association, rechercher un URL identique à l'URL compris dans le champ Referer dans la table d'enregistrement d'association et exécuter une correspondance d'association et, conformément à la correspondance d'association, marquer un flux correspondant à l'URL dans le champ Referer comme flux primaire ;
dans lequel le module de réception est en outre configuré pour recevoir une réponse HTTP correspondant à la requête Get HTTP si la requête Get HTTP comprend le champ Referer ; et
le module de traitement (12) est en outre configuré pour, si la réponse HTTP reçue par le module de réception comprend un hyperlien, marquer un flux correspondant à l'URL de requête dans la requête Get HTTP stockée dans la table d'enregistrement d'association comme flux secondaire.

6. Dispositif d'association de flux HTTP selon la revendication 5, dans lequel le module de traitement est en outre configuré pour marquer des informations d'identité de client sur l'URL de requête dans la requête Get HTTP et l'URL compris dans le champ Referer stocké dans la table d'enregistrement d'association, les informations d'identité de client étant utilisées pour identifier uniquement un client envoyant la requête Get HTTP.

7. Dispositif d'association de flux HTTP selon la revendication 5, dans lequel le module de traitement est en outre configuré pour : si la requête Get HTTP ne comprend pas le champ Referer, si une réponse HTTP correspondant à la requête Get HTTP et reçue par le module de réception ne comprend pas un hyperlien, supprimer l'URL de requête dans la requête Get HTTP de la table d'enregistrement d'association.

8. Dispositif d'association de flux HTTP selon la revendication 5, dans lequel le module de traitement est en outre configuré pour : si la requête Get HTTP ne comprend pas le champ Referer, si la correspondance d'association n'est pas exécutée dans un temps défini sur l'URL de requête stocké dans la table d'enregistrement d'association, supprimer l'URL de requête sur lequel la correspondance d'association n'est pas exécutée.

9. Dispositif d'association de flux HTTP selon l'une quelconque des revendications 5 à 8, dans lequel le dispositif d'association de flux HTTP est un noeud de support de service général de radiocommunication par paquets, GPRS, de passerelle, GGSN, un noeud de desserte de données en paquets, PDSN, une passerelle de commutation par paquets, PS GW, ou un serveur d'accès à large bande, BRAS.
